(19) Europäisches Patentamt
European Patent Office
Office européen des brevets

(11) **EP 3 425 980 A1**

(12) **EUROPEAN PATENT APPLICATION**
published in accordance with Art. 153(4) EPC

(43) Date of publication:
**09.01.2019 Bulletin 2019/02**

(51) Int Cl.:
*H04W 72/04* (2009.01)    *H04L 5/00* (2006.01)

(21) Application number: **17765812.7**

(22) Date of filing: **14.03.2017**

(86) International application number:
**PCT/CN2017/076546**

(87) International publication number:
**WO 2017/157270 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.03.2016 CN 201610149658**

(71) Applicant: **HFI Innovation Inc.**
**Hsinchu County 302 (TW)**

(72) Inventors:
• **WU, Min**
**Beijing 100029 (CN)**
• **ZHANG, Lei**
**Beijing 100088 (CN)**
• **SUN, Feifei**
**Beijing 100088 (CN)**

(74) Representative: **Hoefer & Partner Patentanwälte mbB**
**Pilgersheimer Straße 20**
**81543 München (DE)**

(54) **UPLINK CONTROL INFORMATION SCHEDULING METHOD AND WIRELESS COMMUNICATIONS APPARATUS**

(57) A method for scheduling an uplink control information (UCI) resource for user equipment includes: receiving downlink control information (DCI); determining the position of a UCI resource region corresponding to a physical downlink share channel (PDSCH) signal scheduled by the DCI according to a predefined rule, wherein the UCI resource region comprises a plurality of UCI resources in a time domain and/or a frequency domain; and transmitting an ACK/NACK signal corresponding to the PDSCH signal in the UCI resource region.

UE receives a DCI and a PDSCH scheduled by the DCI — S1302

UE determines whether CSI reporting is triggered according to a first indication field in the DCI — S1304

UE determines a UCI resource according to a second indication field in the DCI — S1306

UE transmits corresponding UCI information on the UCI resource, where the UCI information is hybrid information of the ACK / NACK of the PDSCH and the CSI, or only the ACK / NACK information of the PDSCH — S1308

FIG. 13

**Description**

**BACKGROUND OF THE INVENTION**

**Field of the Invention**

The invention relates to wireless communication, and more particularly to methods for scheduling and transmitting the UCI and wireless communication devices utilizing the methods.

**Description of the Related Art**

With rapid developments in the cellular mobile communication industry, the fifth-generation (5G) mobile communication system is obtaining increasing attentions. Recently, the 5G has been formally named by the ITU as IMT-2020 and it is expected to enter the commercial phase in 2020. Unlike traditional 2G / 3G / 4G mobile cellular systems, the 5G system will no longer only be human-oriented, and will have better support for a variety of "Machine Type Communication (MTC)" users. Among the plurality of services for serving the MTC user, there is one called Massive MTC (MMC). The main features of the MTC user equipment served by this kind of MMC service are as follows: (1) low cost, which is much lower than smartphones; (2) huge number ($10^6$ connections will be supported per square kilometer according to the requirements of ITU for 5G and MMC services); (3) low data transfer rate requirements; and (4) a high tolerance for latency.

In cellular communication for legacy user equipment, cell coverage is typically considered to be about 99% when designing the system. An uncovered 1% user can utilize the mobility of the user equipment itself to obtain service through cell selection or cell reselection. Unlike traditional human-oriented user equipment, some types of MMC user equipment may be deployed in relatively fixed locations, such as the MTC user equipment that serves public facilities (street lights, water, electricity, gas meters, etc.). This type of MMC user equipment has almost no mobility characteristics. Therefore, when designing the MMC communication system, the cell coverage is usually required to reach 99.99% or higher. Even worse, MMC users of this type may be deployed in scenarios with severe path loss, such as in a basement. Therefore, in order to support better coverage, the target Maximum Coupling Loss (MCL) adopted by the MMC system design is usually 10dB to 20dB greater than a traditional cellular system. For example, in the standardization work of the 3GPP Rel-13 Narrow Band Internet-of-Things (NB-IoT) system, the cell MCL target reaches 164dB or above.

In the NB-IoT system, there are very few available subcarriers in the frequency domain. For example, there are only 12 subcarriers in the 180 kHz system bandwidth with 15 kHz subcarrier spacing. In addition, because of the simplification of the capability of the NB-IoT user equipment, some physical layer processes and designs in legacy LTE system cannot be applied. Therefore, comparing to the LTE system, design for narrowband resources in physical layer and other layers, especially the scheduling and transmission methods and corresponding devices for uplink control resource UCI in the NB-IoT and future technology are required.

**BRIEF SUMMARY OF THE INVENTION**

In view of this, methods and wireless communication devices for scheduling UCI are provided.

In a novel aspect, the invention provides a method for scheduling UCI resources for a user equipment. The method comprises: receiving, by the UE, downlink control information (DCI); determining, by the UE, the position of a UCI resource region corresponding to a physical downlink share channel (PDSCH) signal scheduled by the DCI according to a predefined rule. The UCI resource region comprises a plurality of UCI resources in a time domain and/or a frequency domain. The method further comprises transmitting an ACK/NACK signal corresponding to the PDSCH signal in the UCI resource region.

In another novel aspect, the invention provides a wireless communication device for scheduling a UCI resource. The wireless communication device comprises a radio transceiver performing wireless transmission with at least a base station; and a controller connected to the radio transceiver. The controller is configured to receive downlink control information (DCI), and determine the position of a UCI resource region corresponding to a physical downlink share channel (PDSCH) signal scheduled by the DCI according to a predefined rule. The controller is further configured to transmit an ACK/NACK signal corresponding to the PDSCH signal in the UCI resource region, wherein the UCI resource region comprises a plurality of UCI resources in a time domain and/or a frequency domain.

The UCI scheduling methods and the wireless communication devices provided by the invention are applicable to NB-IoT and forthcoming systems that require the narrowband resources design in the physical layer and other layers. A person skilled in the art may understand that the summary is not intended to limit the scope of the invention, and the scope of the invention is based on the claims.

## BRIEF DESCRIPTION OF DRAWINGS

The invention can be more fully understood by reading the subsequent detailed description and examples with references made to the accompanying drawings, wherein:

FIG. 1 is a block diagram of a wireless communication environment implemented according to an embodiment of the invention;
FIG. 2A is a block diagram of a wireless communication device 200 according to an embodiment of the invention;
FIG. 2B is a block diagram of a base station 300 according to an embodiment of the invention;
FIG. 3 is a flow chart of a method for allocating UCI resources in a time-frequency domain;
FIG. 4 is a schematic diagram of determining the UCI resource region based on the ending sub-frame of the PDSCH signal transmission;
FIG. 5 is a schematic diagram of determining the UCI resource region based on the ending sub-frame of a downlink scheduling window;
FIG. 6 is a schematic diagram of determining the UCI resource region based on the ending sub-frame of the PDCCH signal transmission;
FIG. 7 is a schematic diagram of determining the UCI resource region based on the ending sub-frame of a PDCCH search space;
FIG. 8 is a schematic diagram of determining the UCI resource region based on the position of an uplink scheduling window;
FIG. 9 is a schematic diagram of determining the UCI resource region based on an indication field in the DCI;
FIG. 10 is a schematic diagram of determining the UCI resource region based on an indication field in the DCI;
FIG. 11 is a flow chart of a method for designing UCI transmission;
FIG. 12 is another flow chart of a method for designing UCI transmission; and
FIG. 13 is a flow chart of a method for aperiodic CSI reporting.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

With reference to the figures and the following descriptions, the features of the embodiments of the invention will become apparent. These embodiments are only exemplary and not limiting to the present invention. In order to enable those skilled in the art to easily understand the principles and implementation manners of the present invention, the NB-IoT system is taken as an example to describe the embodiments of the present invention. However, it should be understood that the embodiments of the present invention are not limited to the above scenarios. The embodiments are also applicable to other systems that involve the UL ACK / NACK or other UCI transmissions.

The invention proposes a method for transmitting an uplink (UL) Acknowledgment / Negative Acknowledgment (ACK / NACK) for the NB-IoT and other systems. For example, unlike the LTE system, a signal processing procedure which is similar to that of a Physical Uplink Shared Channel (PUSCH), that is, generating information bit->encoding->scrambling->modulating, is adopted. The difference between the PUSCH and the proposed method is in that there is no Cyclic Redundancy Code (CRC), and the encoding schemes will be different. In addition, the ACK / NACK transmission resources in the NB-IoT system may also be different from the LTE system. For example, it may occupy only one subcarrier in the frequency domain and occupy multiple sub-frames in the time domain. In addition, the UCI resource of an NB-IoT system may not support carrying multiple UCI transmissions by Code Division Multiplexing (CDM). The UCI resource allocation method also differs from that of the LTE system. For example, UCI resources are allocated in two dimensions, that is, in a time domain and a frequency domain. One possible UCI resource allocation method is to carry an indication field in the DCI which is utilized for scheduling the PDSCH, so as to indicate the time-frequency domain location of the UCI resource. Triggering of the aperiodic Channel Status Information (CSI) reporting of the NB-IoT system may also be different from that of the LTE system. For example, the aperiodic CSI reporting may be triggered within a DCI for scheduling a PDSCH.

In the embodiment of the invention, the term "UCI resource" is used for convenience of description. In the field, other expressions such as "UL ACK / NACK resource", "HARQ-ACK resource of DL PDSCH", "PUCCH resource", "NB-PUCCH resource" and the like, can also be used. Therefore, the embodiment of the invention is not limited thereto.

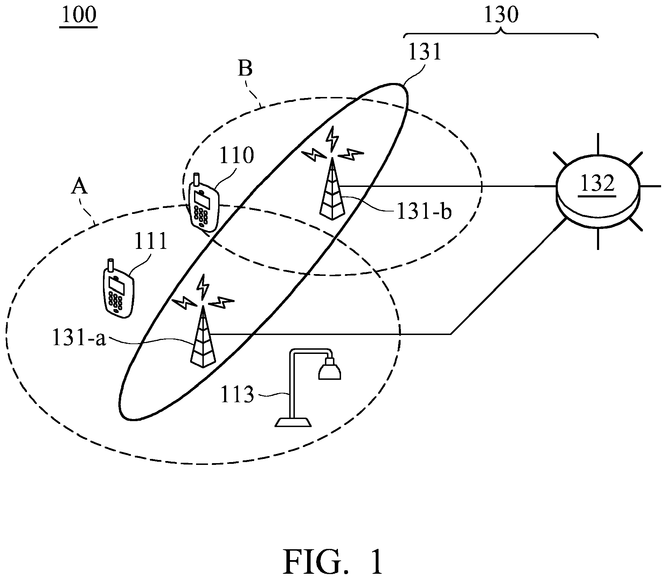

FIG. 1 is a block diagram of a wireless communication environment implemented according to an embodiment of the invention. In one embodiment, the wireless communication environment 100 may comprise a plurality of wireless communication devices (e.g. the wireless communication device 110, the wireless communication device 111 and the wireless communication device 113 shown in FIG. 1) and a service network 130. The wireless communication device 110, the wireless communication device 111 and the wireless communication device 113 are wirelessly connected to the service network 130 to obtain the mobile service. Each of the wireless communication device 110, the wireless communication device 111, and the wireless communication device 113 may be referred to as user equipment. In one embodiment, the wireless communication device 110 and the wireless communication device 111 may be the UEs with mobility, such as a feature phone, a smartphone, a personal tablet, a laptop, or any other computing device that can support the wireless communication technology adopted by the service network 130. In another embodiment, the wireless communication device 113 may be the UE without mobility or with low mobility. For example, it may be the UE that is deployed in a relatively fixed location and serves in the MMC. More specifically, it may be the UE applied to a public facility (such as a street lamp, a water meter, a power meter, a gas meter, or the like), or the UE applied to a domestic facility (such as a desk lamp, an oven, a washing machine, a refrigerator). The UE serving in the MMC / MTC (e.g., the wireless communication device 113) has almost no mobility.

In one embodiment, the serving network 130 may be the network of an LTE / LTE-A / LTE-U (LAA) / TD-LTE / 5G / IoT / LTE-M / NB- IoT / EC-GSM / WiMAX / WCDMA. The service network 130 may comprise an access network 131 and a core network 132. The access network 131 is responsible for processing radio signals, achieving the radio protocols, and connecting the wireless communication device 110, the wireless communication device 111 and the core network 132. The core network 132 is responsible for managing mobility, network side authentication, and is a public / external network (e.g., the Internet) interface.

In one embodiment, each of the access network 131 and the core network 132 may comprise one or more network nodes with the above mentioned functions. For example, the access network 131 may be the Evolved Universal Terrestrial Radio Access Network (hereinafter referred to as E-UTRAN) that comprises at least two evolved NodeBs (e.g., macro cell / macro eNBs, pico cell / pico ENBs, or femto cell / femto eNBs). The core network 132 may be the Evolved Packet Core (EPC) that comprises a Home Subscriber Server (HSS), a Mobility Management Entity (MME), a Serving Gateway (hereinafter referred to as S-GW), and a Packet Data Network Gateway (hereinafter referred to as PDN-GW or P-GW), but the invention is not limited thereto.

As shown in FIG. 1, the wireless communication device 110 is located within the coverage area of the cell A and within the coverage area of the cell B. That is, the wireless communication device 110 is located in the overlapped coverage area of cell A and cell B. The wireless communication device 111 is only located within the coverage area of the cell A. The access network 131 may comprise an eNB 131-a and an eNB 131-b serving in the cell A and the cell B. The eNB 131-a and the eNB 131-b may be cellular base stations that communicate with UEs. The eNB may be the cellular station wirelessly communicating with multiple UEs, or may be a base station, an Access Point (AP), or the like. Each eNB provides specific communication coverage for a particular geographic area. In 3GPP, "cell" may be considered as the specific communication coverage area of one eNB.

In an embodiment, the access network 131 may be a Heterogeneous Network (hereinafter referred to as HetNet). The HetNet may comprise different types of eNBs, such as macro eNBs, pico eNBs, femto eNBs, relays, and the like. The macro eNB covers a relatively large geographic area (e.g., a geographical area with radius of several kilometers) and allows unrestricted access to subscription services between UE and network providers. The pico eNB covers a relatively small geographic area and allow unrestricted access to subscription services between UE and network providers. The femto eNB is provided in a relatively small geographic area (e.g., a home or small office) in a residential category. Besides unrestricted access, a femto eNB may also provide restricted access for the UE (e.g., the UE in a closed subscriber group (CSG), the UE used by a user in a home, etc.) associated with the femto eNB.

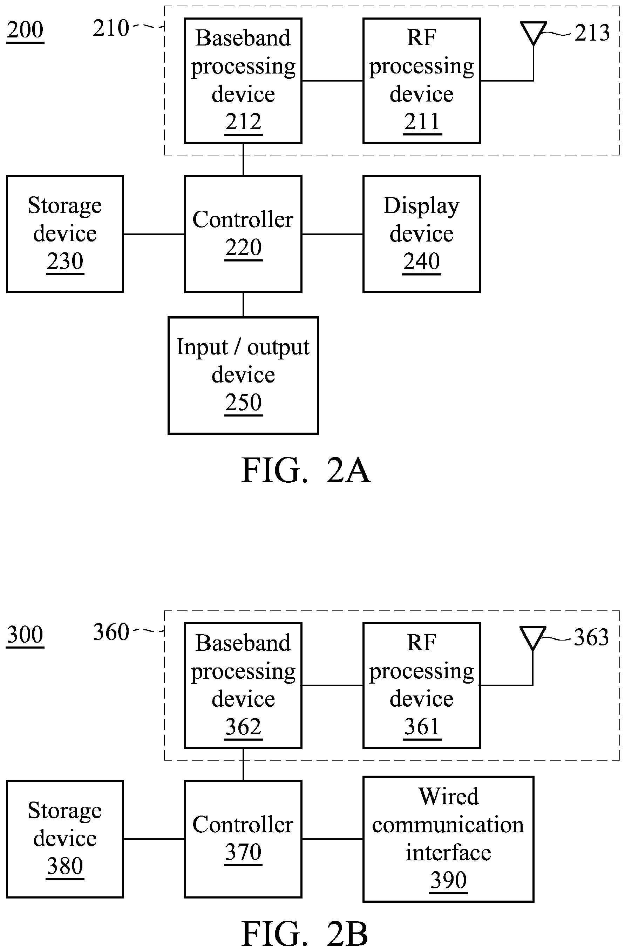

FIG. 2A is a block diagram of a wireless communication device 200 according to an embodiment of the invention. The wireless communication device 200 may be the user equipment shown in the embodiment of FIG. 1. The wireless communication device 200 may comprise a radio transceiver 210, a controller 220, a storage device 230, a display device 240 and an input / output device 250. The controller 220 is respectively connected to the radio transceiver 210, the storage device 230, the display device 240 and the input / output device 250.

In one embodiment, the radio transceiver 210 is configured to perform both wireless transmissions and the transmission and reception with the access network 131, and may comprise an interference cancellation and suppression receiver. The radio transceiver 210 may comprise a radio frequency (RF) processing device 211, a baseband processing device 212 and an antenna 213. The RF processing device 211 is respectively connected to the baseband processing device 212 and the antenna 213. In this embodiment, the transmitting end of the RF processing device 211 receives the baseband signal from the baseband processing device 212, and converts the received baseband signal into an RF signal to be sent by the antenna 213 later. The frequency band of the RF signal may be a frequency band of 900 MHz, a frequency band of 2100 MHz or a frequency band of 2.6 GHz used in LTE / LTE-A / TD-LTE technology, or may be a frequency band of 1800 MHz, a frequency band of 900MHz, a frequency band of 800MHz or a frequency band of 700MHz used by NB-IoT / LTE-M, or may also be a frequency band used by other wireless communication technology. In this embodiment, the transmitting end of the RF processing device 211 may comprise at least a power amplifier, a mixer and a low-pass filter, but the invention is not limited thereto.

In one embodiment, the receiving end of the radio frequency processing device 211 receives the RF signal through the antenna 213, and converts the received RF signal into a baseband signal for further processing by the baseband processing device 212. The frequency band of the radio frequency signal may be a frequency band of 900 MHz, a frequency band of 2100 MHz or a frequency band of 2.6 GHz used in LTE / LTE-A / TD-LTE technology, or may be a frequency band of 1800 MHz, a frequency band of 900MHz, a frequency band of 800MHz or a frequency band of 700MHz used by NB-IoT / LTE-M, or may also be a frequency band used by other wireless communication technology. In this embodiment, the receiving end of the RF processing device 211 may comprise multiple hardware devices for processing RF signals. For example, the receiving end of the RF processing device 211 may comprise at least a low noise amplifier, a mixer (also called a down-converter), or a low-pass filter, but the invention is not limited thereto. The low noise amplifier is configured to perform noise processing on the RF signal received from the antenna 213. The mixer is configured to perform a frequency down conversion operation on the RF signal that has been processed by the low noise amplifier.

In one embodiment, the baseband processing device 212 is configured to perform baseband signal processing and is configured to control communication between a Subscriber Identity Module (SIM) and the RF processing device 211. The baseband processing device 212 may comprise a plurality of hardware components to perform the baseband signal processing such as an analog to digital converter, a digital to analog converter, an amplifier circuit related to gain adjustment, a modulation / demodulation related circuit, an encoding / decoding related circuit and so on. A person skilled in the art may understand that the baseband processing device may further comprise multiple modules (not shown in the figure) implemented by software, firmware or hardware, or any combination thereof to further implement the functions of the invention. For example, a DCI decoding module for decoding the received DCI, and a UCI decoding module for deciding on the position of a UCI resource region corresponding to a PDSCH signal scheduled by the DCI according to the received DCI and further processing the UL control information by repeated encoding and scrambling for later transmission.

In one embodiment, the controller 220 may be a general purpose processor, a micro control unit (MCU), an application processor, a digital signal processor or any type of processor control device that processes digital data. The controller 220 may comprise a plurality of circuits for providing functions such as data processing and calculation, controlling the radio transceiver 210 to wirelessly communicate with the access network 131, storing data into and retrieving data from the storage device 230, transmitting a sequence of the frame data (e.g., the frame data representing messages, graphics, images) to the display device 240 and receiving signals from the input / output device 250. In particular, the controller 220 may cooperate with the operations of the radio transceiver 210, the storage device 230, the display 240, and the input-output device 250 to perform the proposed method of the invention.

In another embodiment of the invention, the controller 220 may be incorporated in the baseband processing device 212 to be a baseband processor.

In one embodiment, the storage device 230 is a non-transitory machine-readable storage medium. The storage device 230 may comprise memories (e.g., flash memory, non-volatile random access memory), magnetic storage devices (e.g. the hard disc, the magnetic tape, or optical disk), or any combination thereof for storing instructions and / or program code for the proposed methods, applications and/or protocols of the invention.

In an embodiment, the display device 240 may be a Liquid-Crystal Display (LCD), a Light-Emitting Diode (LED) display, or an Electronic Paper Display (hereinafter referred to as EPD) and the like. Alternatively, the display device 240 further comprises one or more touch sensors disposed thereon or below for sensing touch, contacting or proximity of a target (e.g., a finger or stylus).

In one embodiment, the input / output device 250 may comprise one or more buttons, a keyboard device, a mouse, a touchpad, a video camera, a microphone and / or a speaker, etc., as a human-machine interface for interacting with the user (Man-Machine Interface, hereinafter referred to as MMI)

It should be understood that the various components described in the FIG. 2A embodiment are for illustration only, and are not intended to limit the scope of the invention.

FIG. 2B is a block diagram of a base station 300 according to an embodiment of the invention. The base station 300 may be a network device at the network-side and comprise a radio transceiver 360, a controller 370, a storage device 380, and a wired communication interface 390. The controller 370 is respectively connected to the radio transceiver 360, the storage device 380, and the wired communication interface 390. The RF processing device 361, the baseband processing device 362 and the antenna 363 of the radio transceiver 360 are similar to the RF processing device 211, the baseband processing device 212 and the antenna 213 of the radio transceiver 210 described in FIG. 2A. Therefore, the detailed descriptions are omitted here.

In one embodiment, the controller 370 may be a general purpose processor, an MCU, an application processor, a digital signal processor, or the like. The controller 370 may comprise a plurality of circuits for providing functions such as data processing and calculation, controlling the radio transceiver 360 to wirelessly communicate with the wireless communication devices 110, 111 and 113, storing data into and retrieving data from the storage device 380, and transmitting/receiving messages from other network entities through the wired communication interface 390. In particular, the controller 370 cooperates with the described operations of the radio transceiver 360, the storage device 380, and the wired communication interface 390 to perform the proposed method of the invention.

In another embodiment, the controller 370 may be incorporated into the baseband processing device 362 to be a baseband processor.

Those with ordinary skill in the art will appreciate that depending on the various functions and operations, the circuitry of controller 220 or controller 370 may generally comprise a plurality of transistors to control the operation of the circuitry. As will be further understood, the particular architecture or connection of the transistor is typically decided by a compiler, such as a Register Transfer Language (RTL) compiler. The RTL compiler can operate in a script similar to the assembly language by a processor, so as to compile the script into a format that can be used in the circuit layout of the final circuit. In fact, RTL is well known for its role and purpose in promoting the design of electronic and digital systems.

In one embodiment, the storage device 380 may be a non-transitory machine-readable storage medium. The storage device 330 may comprise memories (e.g., flash memory, non-volatile random access memory), magnetic storage devices (e.g. the hard disc, the magnetic tape, or optical disk), or any combination thereof for storing instructions and / or program code for the proposed methods, applications and/or protocols of the invention.

In one embodiment, the wired communication interface 390 is responsible for providing the functionality for communicating with other network entities (e.g., MMEs and S-GWs) in the core network 132. The wired communication interface 390 may comprise a cable modem, an Asymmetric Digital Subscriber Line (ADSL) modem, a Fiber-Optic Modem (FOM), and / or an Ethernet interface.

Embodiment 1 (the procedure for determining the UCI resource allocated in the time-frequency domain by the network side)

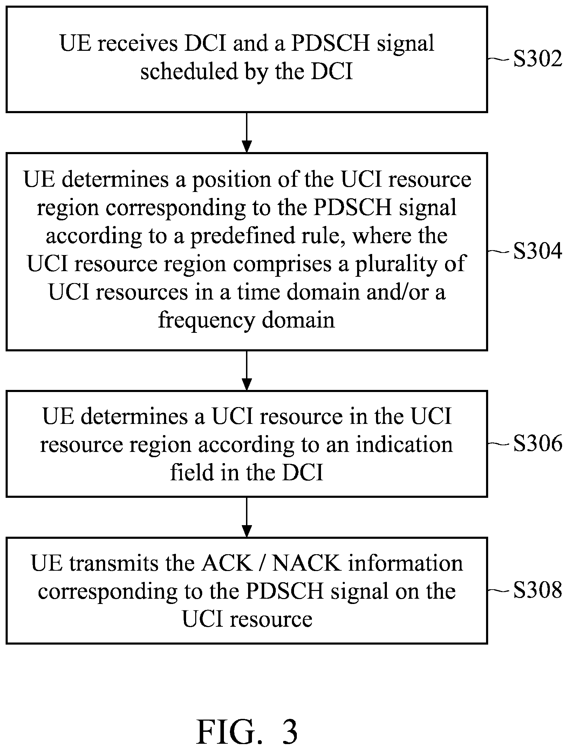

In an embodiment, as shown in FIG. 3, a method for a UE to determine the UCI resources allocated in a time-frequency domain by the network side is provided. The method comprises the following steps. In step S302, a user equipment (e.g. the antenna 213 of the wireless communication device 200) receives DCI from a network device at the network side (for example, the base station 300), and receives a PDSCH signal scheduled by the DCI. The DCI is carried in the Physical Downlink Control Channel (PDCCH) signal. In step S304, the UE (for example, the controller 220 of the wireless communication device 200) determines, according to a predefined rule, a position of the UCI resource region corresponding to the PDSCH signal in a time domain and / or a frequency domain. The UCI resource region comprises a plurality of UCI resources in a time domain and/or a frequency domain. In step S306, the UE (for example, the controller 220 of the radio communication device 200) determines, according to an indication field in the DCI (also called a UCI resource indication field (for indicating the UCI resources)), a time and / or frequency domain position of a UCI resource in the UCI resource region. In step S308, the UE transmits (for example, the controller 220 of the radio communication device 200 transmits through the antenna 213) the ACK / NACK information corresponding to the PDSCH signal on the UCI resource for reporting the decoding result of the PDSCH signal to the network device.

In one example, a UCI resource region may comprise a plurality of UCI resources in the time domain and a plurality of UCI resources in the frequency domain. The network device may allocate UCI resources in both the time and frequency domains. When the physical resources in the UCI resource region are not allocated for UCI transmission, the network device may allocate them for the PUSCH transmission. That is, the UCI resource scheduling and the PUSCH resource scheduling may share the same physical resource region.

In an example, the UE needs to determine the position, including time domain position and frequency domain position, of the corresponding UCI resource in the UCI resource region according to a dedicated DCI indication field (that is, the UCI resource indication field) when transmitting the UL ACK / NACK. The dedicated DCI indication field is comprised in the DCI for scheduling the PDSCH. That is, when a DCI schedules the PDSCH, it also carries a DCI field for indicating a UCI resource to carry the ACK / NACK information transmission of this PDSCH.

In one example, the UCI resources may also be referred to as PUCCH resources or UL ACK / NACK resources. One UCI resource corresponds to a Physical Radio Block (PRB) for transmitting ACK / NACK information of the PDSCH, and the physical resource block can only carry the UL ACK / NACK transmission of one UE. That is, the UL ACK/ NACK transmission between the UEs can only be multiplexed in the time or frequency domain. The size of a UCI resource (that is, the number of resource elements (REs) included in a physical resource block) is predefined, and some of the REs are used for Demodulation Reference Signal (DMRS). The number of REs for DMRS and their positions are predefined, and the remaining REs may be used for UL ACK / NACK information transmission.

In one example, there is only one pattern of UCI resources. For example, one subcarrier in the frequency domain and two sub-frames in the time domain. In another example, there may be a plurality of UCI resource patterns. For example, one or more subcarriers in the frequency domain and one or more sub-frames in the time domain. The number of REs contained in each pattern may be the same or almost the same. In one example, which UCI resource pattern is to be used may be configured in a semi-static way (semi-statically configured), e.g., using a higher layer signaling configuration. In another example, which UCI resource pattern is to be used may be configured in a dynamic way (dynamically configured). For example, using a DCI indication field for configuration, and the DCI indication field is comprised in the DCI for scheduling the PDSCH.

In one example, the number of REs comprised in one UCI resource may be smaller than the number of REs comprised in a minimum resource unit (RU) for PUSCH transmission. For example, one UCI resource may comprise one subcarrier and two sub-frames, that is, comprising 28 REs. The minimum resource unit for PUSCH transmission may comprise one subcarrier and 8 sub-frames, that is, comprising 112 REs. In another example, the number of REs comprised in one UCI resource is the same as the number of REs comprised in the minimum resource unit for PUSCH transmission, and the resource patterns are also the same.

In one example, one UCI resource is only used for transmitting 1-bit UL ACK / NACK information, which may also be referred to as UL ACK / NACK resource. In another example, one UCI resource may be used for a hybrid transmission of any one or more of UL ACK / NACK, CSI, and Scheduling Request (SR).

One UCI resource region may comprise multiple UCI resources in the frequency domain. In one example, the frequency domain size of the UCI resource region is 180 kHz. Assuming that one UCI resource occupies one subcarrier, when the subcarrier spacing is 15 kHz, 12 UCI resources are allocated in the frequency domain. When the subcarrier spacing is 3.75 kHz, 48 UCI resources can be allocated in the frequency domain.

One UCI resource region may comprise multiple UCI resources in the time domain. In one example, the time-domain size for UCI resource allocation is 10 sub-frames. Assuming that one UCI resource occupies 2 sub-frames. When allocating the UCI based on the number of UCI resources comprised in 10 sub-frames, 10/2 = 5 UCI resources may be allocated in the time domain. When allocating the UCI based on the position of the starting sub-frame of the UCI resource, that is, each sub-frame in the 10 sub-frames can be used as a starting sub-frame of the UCI resource, 10 UCI resources may be allocated in the time domain. The UCI resource region being used has a time domain size of (10 + N-1) sub-frames and N is the number of sub-frames occupied by one UCI resource.

In one example, the time-frequency domain sizes of the UCI resource region are predefined, for example, there are 12 subcarriers in the frequency domain and 4 sub-frames in the time domain. In another example, the time-frequency domain size of the UCI resource region is semi-statically configured, for example, through a cell-specific or UE-specific high-level signaling configuration. In yet another example, the frequency domain size of the UCI resource region is predefined and the time domain size of the UCI resource region is semi-statically configured. In yet another example, the time domain size of the UCI resource region is predefined and the frequency domain size of the UCI resource region is semi-statically configured.

Embodiment 2 (the method for determining the position of a UCI resource region according to a predefined rule)

In one embodiment, a method for determining a UCI resource region according to a predefined rule is provided. The method comprises: the UE (for example, the controller 220 of the wireless communication device 200) determines a position of a reference sub-frame. A time span between a starting sub-frame of the UCI resource region and the reference sub-frame is a predefined value, a semi-statically configured value, or a dynamically configured value.

In one example, based on the time span which is a predefined value, a semi-statically configured value, or a dynamically configured value as described above, the UE may decide the position of the starting sub-frame of the UCI resource region according to the position of the reference sub-frame. The UCI resource allocation will take the starting sub-frame as a reference point. For example, the DCI for scheduling the PDSCH carries an indication field for indicating that the position of the starting sub-frame of the UCI resources is $k_i (i=0,1,...,K\text{-}1)$. That is, the DCI dynamically indicates that one sub-frame in the K sub-frames ($K \geq 2$) is the starting sub-frame of the UCI resources, where K is a predefined value. For each $i$, the value of $k_i$ is a predefined value or a semi-statically configured value. Here, the position $k_i$ of the sub-frame is obtained by taking the starting sub-frame of the UCI resources as the reference point. That is, the starting sub-frame of the UCI resource region is $n$, and the actual starting sub-frame of the allocated UCI resources is $n+k_i$.

In another example, UCI resource allocation is not taking the starting position of one resource region as a reference point, but taking a reference sub-frame as a reference point. For example, an indication field is carried in the DCI for scheduling the PDSCH, so as to indicate that a starting sub-frame position of a UCI resource is $k_i (i=0,1,...,K\text{-}1)$. That is, the DCI dynamically indicates that one sub-frame in the K sub-frames ($K \geq 2$) is the starting sub-frame of the UCI resources, where K is a predefined value. For each $i$, the value of $k_i$ is a predefined value or a semi-statically configured value. Here, the position $k_i$ of the sub-frame is obtained by taking a reference sub-frame as the reference point. That is, the reference sub-frame is $n$, and the actual starting sub-frame of the allocated UCI resources is $n+k_i$. The reference sub-frame here may be the ending sub-frame of the transmission of the corresponding PDSCH signal, the ending sub-frame of the transmission of a PDCCH signal which carries the DCI, the ending sub-frame of a search space of the PDCCH signal comprising corresponding DCI or the ending sub-frame of a downlink scheduling window comprising transmission of the PDSCH signal.

In one example, the reference sub-frame may be one downlink sub-frame. The spacing between the downlink subcarriers is 15 kHz. The duration of the downlink sub-frame is 1 ms, and the time span between the reference sub-frame and the starting sub-frame of the UCI resource region is 12 ms. When the spacing between the uplink subcarriers is 15 kHz, and the reference sub-frame is n, then the starting sub-frame of the UCI resource region is n + 13. When the spacing between the uplink subcarriers is 3.75 kHz, the duration of the uplink sub-frame is 4 ms, the time span between the reference sub-frame and the starting sub-frame of the UCI resource region should be at least 12 ms. The starting sub-frame of the UCI resource region is an uplink sub-frame closest to the reference sub-frame that meets this requirement. That is, the actual time span between the reference sub-frame and the starting sub-frame of the UCI resource region may be greater than 12 ms and may be dynamically changed within 12 to 15 ms.

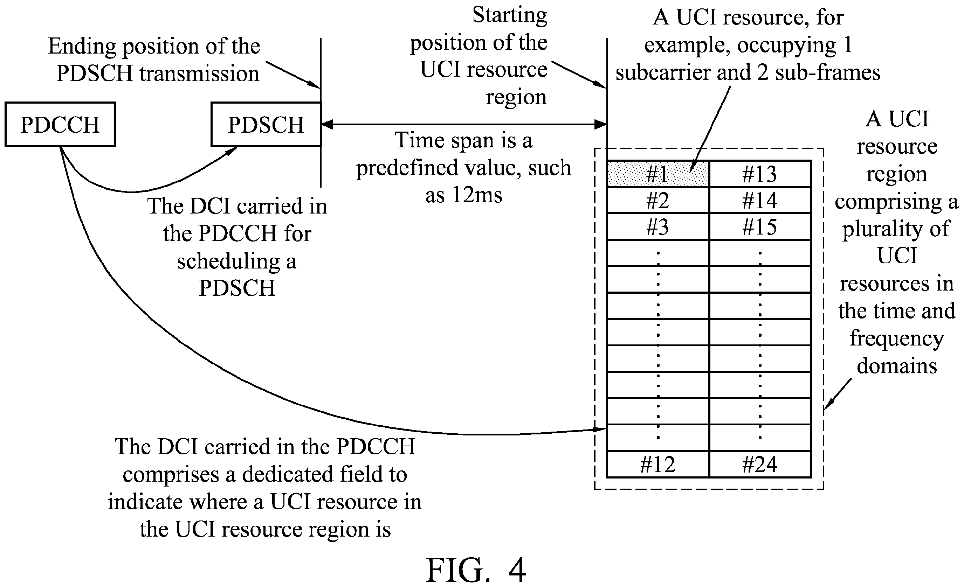

In an example, as shown in FIG. 4, the reference sub-frame is an ending sub-frame (i.e., the last sub-frame) of the corresponding PDSCH transmission. If the PDSCH is a repeated transmission, the reference sub-frame is the ending sub-frame of the last repeated PDSCH transmission. The time span between the starting sub-frame of the UCI resource region and the ending sub-frame of the corresponding PDSCH transmission is a predefined value, such as 12 ms. In another example, the time span is a semi-statically configured value or a dynamically configured value.

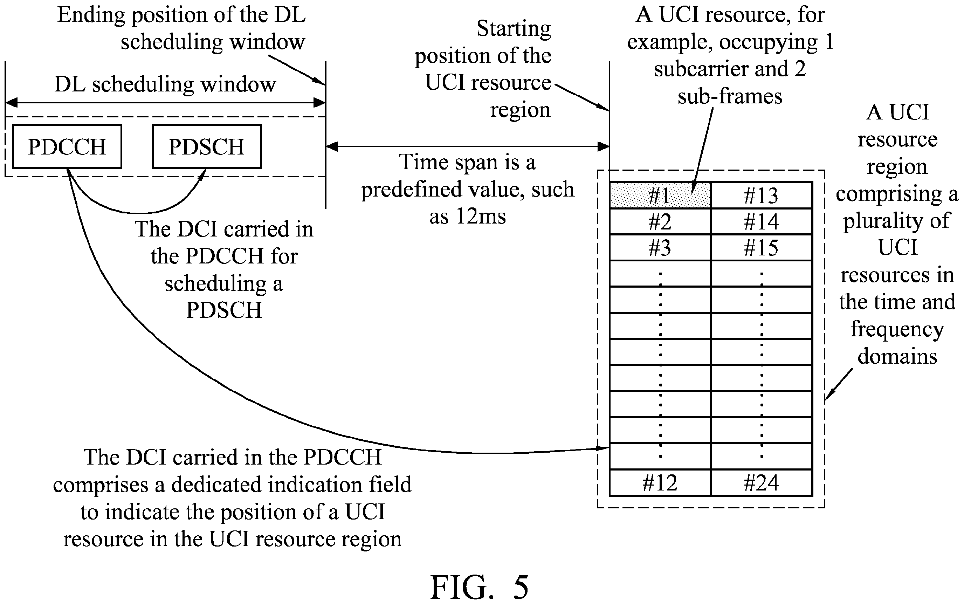

In another example, as shown in FIG. 5, the reference sub-frame is an ending sub-frame (i.e., the last sub-frame) of a downlink scheduling window comprising the corresponding PDSCH transmission. If the PDSCH is a repeated transmission, the reference sub-frame is the ending sub-frame of a downlink scheduling window comprising the last repeated PDSCH transmission. The time span between the starting sub-frame of the UCI resource region and the ending sub-frame of the downlink scheduling window comprising the corresponding last PDSCH transmission is a predefined value, such as 12 ms. In another example, the time span is a semi-statically configured value or a dynamically configured value. In an example, the downlink scheduling window may comprise the PDCCH region and the PDSCH region. In another example, the downlink scheduling window may comprise only the PDSCH region.

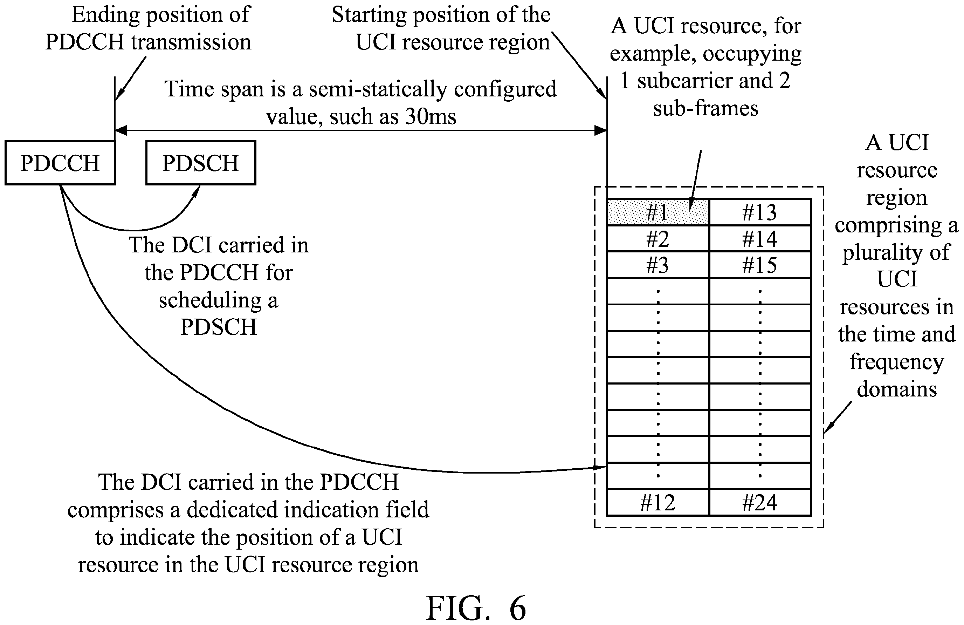

In another example, as shown in FIG. 6, the reference sub-frame is the ending sub-frame (i.e., the last sub-frame) of a PDCCH transmission carrying a corresponding DCI. If the PDCCH is a repeated transmission, the reference sub-frame is the ending sub-frame of the last repeated PDCCH transmission. The time span between the starting sub-frame of the UCI resource region and the ending sub-frame of the PDCCH transmission signal carrying the DCI is a semi-statically configured value. In another example, the time span is a dynamically configured value.

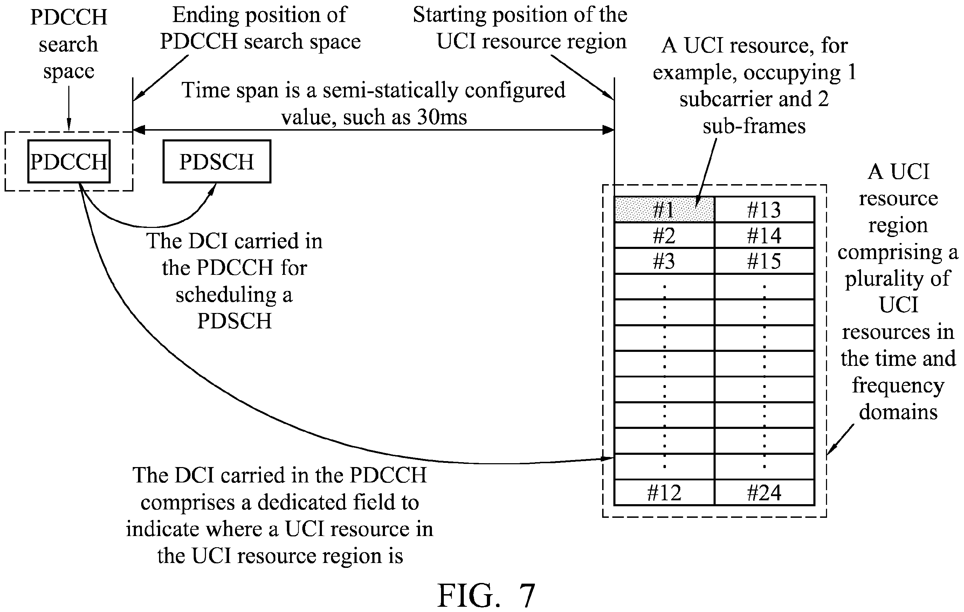

In another example, as shown in FIG. 7, the reference sub-frame is an ending sub-frame (i.e., the last sub-frame) of a PDCCH search space (SS) comprising the corresponding DCI. If the PDCCH is a repeated transmission, the reference sub-frame is the ending sub-frame of the PDCCH search space comprising the last PDCCH transmission. The time span between the starting sub-frame of the UCI resource region and the ending sub-frame of the PDCCH search space carrying the DCI is a semi-statically configured value. In another example, the time span is a dynamically configured value.

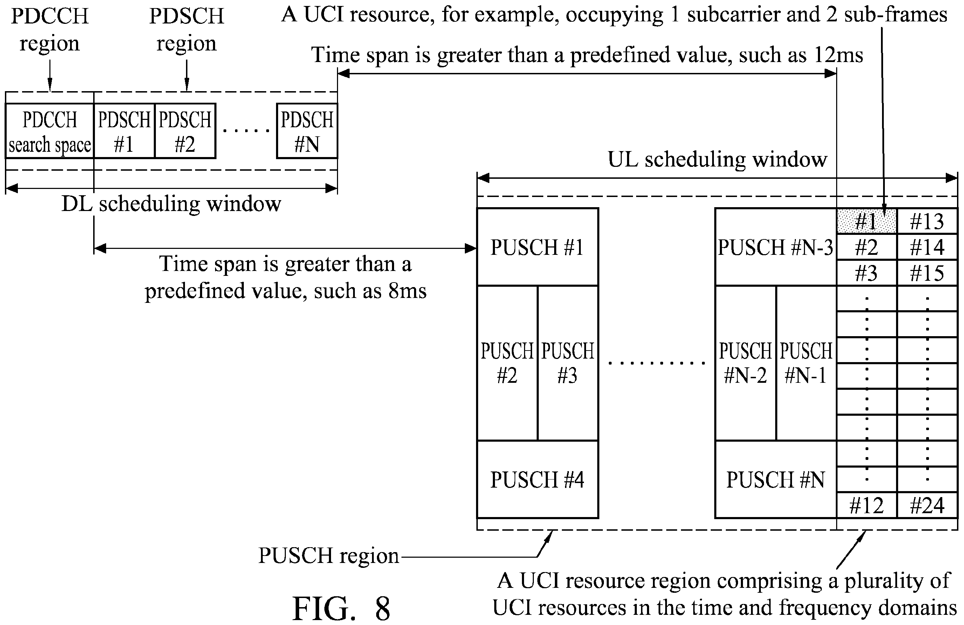

In another example, as shown in FIG. 8, the UCI resource region is a predefined region in the uplink scheduling window, for example, at the end or the beginning of the uplink scheduling window. In an example, the uplink scheduling window and the downlink scheduling window carrying the corresponding PDSCH transmission correspond to the same PDCCH search space. In another example, after the uplink scheduling window corresponds to the PDCCH search space carrying the DCI, the next corresponding scheduling window is used for scheduling the UCI resource. That is, after a PDCCH search space corresponds to an uplink scheduling window n for scheduling the PUSCH resources, the next corresponding scheduling window (n+1) is used for scheduling the UCI resource corresponding to the PUSCH.

Embodiment 3 (a method for determining a time domain position and/or a frequency domain position of a UCI resource according to the DCI indication field)

In one embodiment, a method for determining a UCI resource according to an indication field of the DCI is provided. The method comprises: indicating a time domain position and/or a frequency domain position of a UCI resource, or indicating an offset value of a time-domain position and / or an offset value of a frequency-domain position of one UCI resource by an indication field (that is, a UCI resource indication field) of the DCI transmitted by the network side.

In one example, information of the time domain position and the frequency domain position of the UCI resource may be independently encoded. That is, the UCI resource indication field may comprise two independent subdomains, respectively indicating the time domain position information and the frequency domain position of the UCI resource. For example, the time domain position information may indicate $N_{time}$ kinds of possibilities, and the frequency domain position information may indicate $N_{freq}$ kinds of possibilities, and the number of bits corresponding to the two subdomains may be $\lceil \log_2(N_{time}) \rceil$ and $|\log_2(N_{freq})|$, respectively. In another embodiment, the time domain position information and the frequency domain position information of the UCI resource may be jointly encoded. For example, the time domain position information may indicate $N_{time}$ kinds of possibilities, and the frequency domain position information may indicate $N_{freq}$ kinds of possibilities, and the number of bits corresponding to the joint indication field may be $|\log_2(N_{time}*N_{freq})|$. Or, in a simple way, a joint index table may be used, where each index corresponds to a time-domain position and a frequency-domain position.

In one example, there is no binding relationship between the time domain position information and the frequency domain position information of the UCI resource indicated in the DCI indication field. For example, the time domain position information may indicate $N_{time}$ kinds of possibilities, and the frequency domain position information may indicate $N_{freq}$ kinds of possibilities, and the number of bits required by the DCI indication field for indicating the information is at least $|\log_2(N_{time}*N_{freq})|$. In another example, there is some binding relationship between the time domain position information and the frequency domain position information of the UCI resource indicated in the DCI indication field. For example, the time domain position information may indicate $N_{time}$ kinds of possibilities, and the frequency domain position information may indicate $N_{freq}$ kinds of possibilities, and the number of bits required by the DCI indication field for indicating the information will be less than $|\log_2(N_{time}*N_{fre})|$. That is, a certain value indicated by the DCI indication field implies both the time domain position information and the frequency domain position information. In one example, the UCI resource indication field indicates the entire time domain position and frequency domain position of a UCI resource. That is, the time-frequency domain position of the UCI resource can be uniquely determined without any additional information. For example, there are 12 possible positions in the frequency domain and 2 possible positions in the time domain. Then, 5 bits can be utilized to indicate the UCI resources.

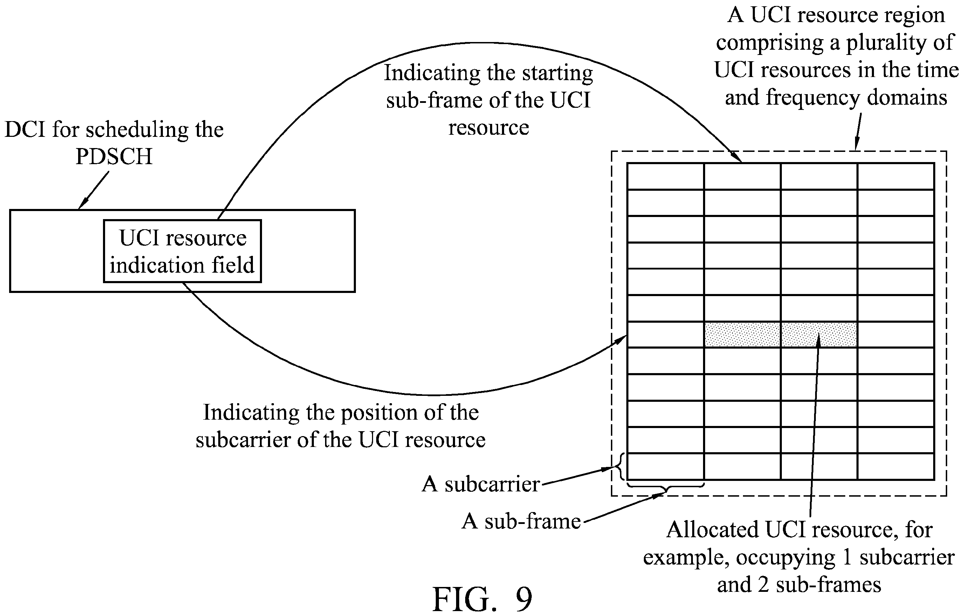

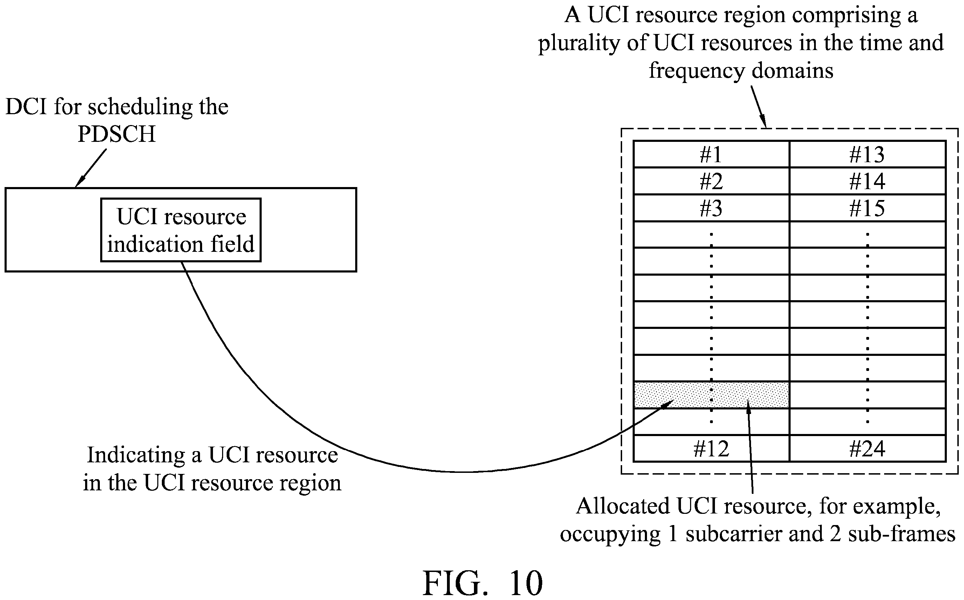

In one example, as shown in FIG. 9 and FIG. 10, the UCI resource indication field indicates a frequency domain position of a UCI resource in a UCI resource region. For example, a subcarrier out of 12 subcarriers is indicated. In addition, the UCI resource indication field further indicates a time domain position of a UCI resource in the UCI resource region. For example, in FIG. 9, a UCI resource indication field indicates that a certain sub-frame in the UCI resource region is taken as a starting sub-frame of the UCI resources. For example, a sub-frame out of 4 sub-frames is indicated. For example, in FIG. 10, the UCI resource indication field indicates one of a plurality of UCI resources included in the UCI resource region in the time domain as the UCI resource. For example, one out of two UCI resources in the time domain is indicated.

In another example, the UCI resource indication field indicates an offset value of a time domain position and an offset value of a frequency domain position of a reference UCI resource, and the time-frequency domain position of the reference UCI resource is a semi-statically configured or implicitly decided. Here, the semi-static configuration is implemented through UE-specific high-level signaling. The implicit decision can be made as follows: implicitly determining the position of the time-frequency domain of the UCI resource based on the index number of the starting sub-frame corresponding to the PDSCH transmission; implicitly determining the position of the time-frequency domain of the UCI resource based on the Cell Radio Network Temporary Identifier (C-RNTI) value; implicitly determining the position of the time-frequency domain of the UCI resource based on the starting Control Channel Element (CCE) index corresponding to the PDCCH transmission, where the CCE index is a number in the entire PDCCH search space; implicitly determining the position of the time-frequency domain of the UCI resource based on a starting sub-frame index of the corresponding PDCCH transmission.

In another example, the UCI resource indication field indicates one of a set of UCI resources, and the time-frequency domain positions of the set of UCI resources are semi-statically configured. For example, four or eight UCI resources are semi-statically configured through UE-specific high-layer signaling, and two or three bits are used in the DCI to indicate that one of the UCI resources is used for the current UCI transmission.

In another example, the UCI resource indication field only indicates the time domain position of the UCI resource, and the frequency domain position of the UCI resource is configured semi-statically or decided implicitly, where the implicit decision is performed in the same way as described above.

In another example, the UCI resource indication field only indicates the frequency domain position of the UCI resource, and the time domain position of the UCI resource is configured semi-statically or decided implicitly, where the implicit decision is performed in the same way as described above.

In one example, the DCI indication field indicates entire information of the frequency domain position and there are $N_{tone}$ subcarriers in the system bandwidth. The subcarrier index indicated by the DCI indication field is $k, 0 \leq k \leq N_{tone}-1$. In one example, $N_{tone}=12$. In another example, $N_{tone}=48$.

In an example, the DCI indication field indicates an offset value of the reference frequency domain position information, and the reference frequency domain position information is semi-statically configured or implicit decided. For example, there are four possible offset values {0, +1, +2, -1}. Assuming that the reference subcarrier index is $k, 0 \leq k \leq N_{tone}-1$, and $N_{tone}$ is the total number of subcarriers in the system bandwidth. If the offset value is 0, it means that the allocated subcarrier position is $k$. If the offset value is +2, it means that the allocated subcarrier position is $mod(k+2, N_{tone})$.

In an example, the above reference frequency domain position information is semi-statically configured by UE-specific high-layer signaling. In another example, the above reference frequency domain position information is implicitly determined. For example, the value $k$ is determined based on the C-RNTI value $n_{RNTI}$ of the UE, where $k=mod(n_{RNTI}, N_{tone})$. In another example, the value $k$ is determined by the starting CCE value $n_{CCE}$ of the corresponding PDCCH transmission, where $k=mod(n_{CCE}, N_{tone})$. The value of $n_{CCE}$ is the number of the entire PDCCH search space. Suppose that the PDCCH search space occupies $N_{sf}$ sub-frames, one sub-frame comprises two CCE, then $0 \leq n_{CCE} \leq 2*N_{sf}-1$. For example, the value $k$ is determined based on the ending sub-frame $n_{sf}$ of the corresponding PDSCH transmission,

where $k=-\text{mod}(n_{sf}, N_{tone})$. Suppose that the radio frame number of the sub-frame is $n_{frame}$, ($0 \leq n_{frame} \leq 1023$), the sub-frame number in the radio sub-frames is $n_{subframe}$, ($0 \leq n_{subframe} \leq 9$), then $n_{sf} = n_{frame}*10 + n_{subframe}$.

In one example, the DCI indication field indicates one of a set of frequency domain position information, and the set of frequency domain position information is a semi-statically configured. For example, there are 12 subcarriers in the system bandwidth, and each set of frequency domain position information comprises 4 subcarriers. There are three sets of configurable frequency domain position information: {0, 3, 6, 9}, {1, 4, 7, 10} {2, 5, 8, 11}.

In one example, the DCI indication field indicates entire information of a time-domain position, such as indicating one out of $N_{startSF}$ predefined starting sub-frame positions, where $t_i$, ($0 \leq i \leq N_{startSF} - 1$). For example, $N_{startSF} = 4$. In one example, $t_i \in \{0,1,2,3\}$. In another example, $t_i \in \{0,2,4,8\}$. When $t_i = 0$, the time span between the starting sub-frame position and the ending sub-frame of the PDSCH transmission is a predefined value, for example, 12 ms.

In an example, the DCI indication field indicates an offset value of reference time domain position information, and the reference time domain position information is a semi-statically configured. For example, there are four possible offset values {0, +1, +2, +3}, and the reference time domain position information semi-statically configured via the upper layer is $t_i \in \{0,8,16,32\}$. When $t_i = 0$, the time span between the starting sub-frame position and the ending sub-frame of the PDSCH transmission is a predefined value, for example, 12 ms.

In one example, the DCI indication field comprises 4 bits. For example, 2 of which are used to indicate frequency domain position information, 2 bits are used to indicate time domain position information. In another example, 4 bits are used to indicate frequency domain position information. The time domain position information is implicitly determined by the ending sub-frame of the PDSCH transmission.

Embodiment 4 (UCI transmission design based on repetitive encoding)

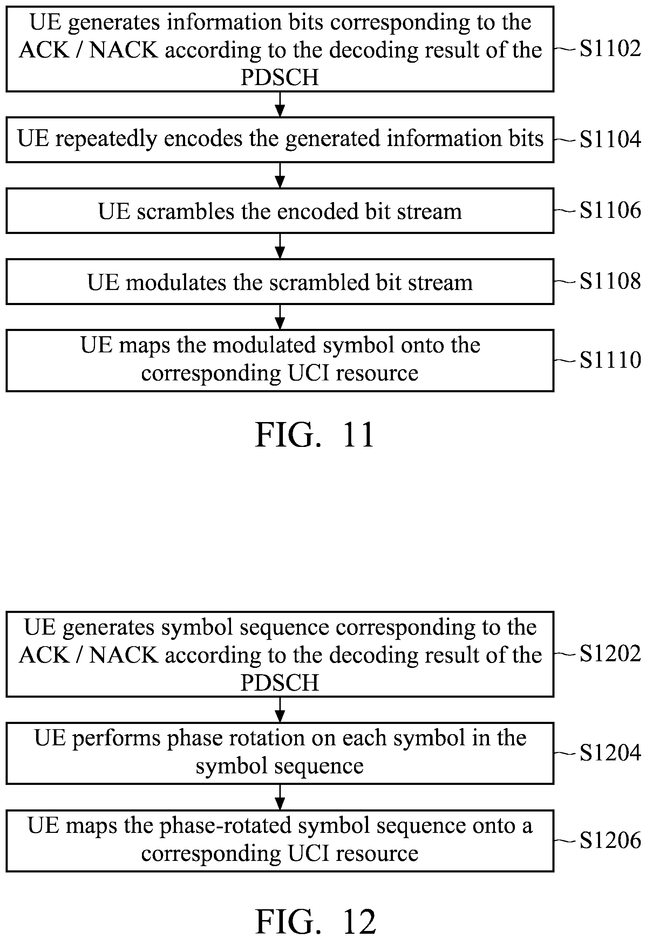

In one embodiment, as shown in FIG. 11, a method for designing UCI transmission based on repetitive encoding is provided. The method comprises the following steps. In step S1102, the UE (for example, the controller 220 of the wireless communication device 200) generates information bits corresponding to the ACK / NACK according to the decoding result of the PDSCH. In step S1104, the UE repeatedly encodes the generated information bits. In step S1106, the UE performs scrambling on the encoded bit stream. In step S1108, the UE performs modulation on the scrambled bit stream. In step S1110, the UE maps the modulated symbol onto the corresponding UCI resource.

In this embodiment, some SC-FDMA symbols of a UCI resource are occupied by the DMRS. That is, the flow of processing the UCI transmission is similar to that of the PUSCH except that there is no CRC and the encoding scheme is different. For example, the PUSCH adopts a turbo encoding scheme, and the UCI adopts a repetitive encoding scheme. In one example, the DMRS location, the DMRS generating method, and the DMRS density used by the UCI transmission are consistent with the PUSCH. In another example, the DMRS location and DMRS generating method used by the UCI transmission are consistent with the PUSCH but the DMRS density is higher than the PUSCH. For example, for PUSCH transmission, there is one SC-FDMA symbol per time slot for the DMRS. As to UCI transmission, there are 2 or 3 SC-FDMA symbols per time slot for DMRS.

In an example, the number $L_{inf}$ of information bits of UL ACK / NACK is 1. For example, {1} indicates ACK, and {0} indicates NACK. In another example, the number $L_{inf}$ of information bits of UL ACK / NACK is 2. For example, {10} indicates ACK, {01} indicates NACK.

The repetitive encoding is to repeatedly encode the information bits until the number of bits after the repetition is the number of encoded bits that can be carried by one UCI resource. The number of times the information bits are repeated depends on a ratio of the number of encoded bits that can be carried by one UCI resource and the number of information bits, that is $N_{repeat} = \lceil L_{coded}/L_{inf} \rceil$. $N_{repeat}$ is the number of repetitions, $L_{coded}$ is the number of encoded bits that can be carried by one UCI resource and $L_{inf}$ is the number of information bits. When the number of encoded bits that can be carried by one UCI resource is not an integer multiple of the number of information bits, the last repetition is a portion of one repetition.

The number of encoded bits that can be carried by one UCI resource is related to the modulation scheme and the number of REs that can be mapped. For example, one UCI resource corresponds to one subcarrier and two sub-frames, each sub-frame comprises two time slots, each time slots comprises 7 SC-FDMA symbols. That is, one UCI resource comprises 28 REs. Assuming that there are 3 SC-FDMA symbols in each time slot for DMRS, a total number of 16 REs can be used for UCI data mapping. Suppose that PI ($\pi$) / 2 BPSK modulation is adopted, a UCI resource can carry 16 encoded bits .

In an example, the number $L_{inf}$ of information bits of the UL ACK / NACK is 1. If the number of encoded bits that can be carried by one UCI resource is 16, the repetitive encoding is repeated 16 times. For example, the repeatedly encoded bit stream corresponding to ACK is {1111111111111111}, and the repeatedly encoded bit stream corresponding to NACK is {0000000000000000}. In another example, the number $L_{inf}$ of information bits of the UL ACK / NACK is 2. If the number of encoded bits that can be carried by one UCI resource is 16, the repetitive encoding is repeated 8 times. For example, the bit stream after repetitive encoding corresponding to the ACK is {1010101010101010}, and the bit stream after repetitive encoding corresponding to the NACK is {0101010101010101}.

In one example, the pseudo-random sequence used for scrambling is generated by a Gold sequence of length 31 as shown in equation (1) below, the initialization thereof is related to the cell ID, the C-RNTI value of the UE and the starting sub-frame of the UCI resource.

$$c(n) = \left(x_1(n+N_C) + x_2(n+N_C)\right) \bmod 2$$
$$x_1(n+31) = \left(x_1(n+3) + x_1(n)\right) \bmod 2 \qquad \text{Eq. (1)}$$
$$x_2(n+31) = \left(x_2(n+3) + x_2(n+2) + x_2(n+1) + x_2(n)\right) \bmod 2$$

where $N_C$=1600, the first m sequence $x_1(\cdot)$ should be initialized by $x_1(0)$=1, $x_1(n)$=0, $n$=1,2,...,30, and the second m sequence $x_2(\cdot)$ should be initialized by $c_{\text{init}} = \sum_{i=0}^{30} x_2(i) \cdot 2^i$ . In an example,

$c_{\text{init}} = n_{\text{RNTI}} \cdot 2^{14} + \lfloor n_{\text{sf}}/2 \rfloor \cdot 2^9 + N_{\text{ID}}^{\text{cell}}$ . In another example, $c_{\text{init}} = \left(\lfloor n_{\text{sf}}/2 \rfloor + 1\right) \cdot \left(2N_{\text{ID}}^{\text{cell}} + 1\right) \cdot 2^{16} + n_{\text{RNTI}}$ .

Here, $n_{\text{RNTI}}$ is the C-RNTI value of the UE, $N_{\text{ID}}^{\text{cell}}$ is the physical ID of the cell and $n_{\text{sf}}$ is the index (0~9) of the starting sub-frame of the UCI resource.

In one example, the modulation scheme is fixed to PI/2 BPSK. In another example, the modulation scheme may be PI/2 BPSK or PI/4 QPSK. In an example, modulation scheme is semi-statically configured, for example, through high-layer signaling configuration. In another example, modulation scheme is dynamically configured. For example, the DCI indicates which modulation scheme is used. In another example, the modulation scheme depends on the number of information bits. For example, when the number of information bits is less than or equal to a certain predefined value, PI/2 BPSK modulation is adopted. When the number of information bits is greater than or equal to a certain predefined values, then PI/4 QPSK modulation is adopted.

When a UCI resource comprises a plurality of subcarriers and a plurality of sub-frames, the UCI data mapping may take a number of ways. In one example, UCI data mapping over the entire UCI resource follows the rule of mapping in the time domain first and then mapping in the frequency domain. In another example, the UCI data mapping is a sub-frame-by-sub-frame mapping, and the mapping in each sub-frame follows the rule of mapping in the time domain first and then mapping in the frequency domain.

Embodiment 5 (UCI transmission design based on symbol sequence)

In one embodiment, as shown in FIG. 12, a UCI transmission design based on symbol sequence is provided. The method comprises following steps. In step S1202, the UE (for example, the controller 220 of the wireless communication device 200) generates a symbol sequence corresponding to the ACK / NACK according to the decoding result of the PDSCH. In step S1204, the UE performs phase rotation on the generated symbol sequence. In step S1206, the UE maps the phase-rotated symbol sequence onto a corresponding UCI resource.

In this embodiment, the UCI transmission is not based on DMRS. That is, the entire UCI resource is used for symbol sequence mapping, and the length of the symbol sequence is equal to the number of available REs contained in one UCI resource.

In one example, two symbol sequences corresponding to the ACK and the NACK have orthogonality, and the Hamming distance of the two symbol sequences is M / 2, where M is the length of the symbol sequence. For example, if one UCI resource occupies one subcarrier and one sub-frame, that is, one UCI resource includes 14 available REs, the symbol sequence corresponding to ACK is {11111111111111}, and the symbol sequence corresponding to NACK is {1111111-1-1-1-1-1-1-1}.

In this embodiment, the symbol sequence is phase rotated, so as to randomize inter-cell interference. In one example, the symbol sequence is phase rotated according to equation (2):

$$d(n_s, l) = s(n_s, l) * \exp\left(j * PI/2 * \bmod\left(n_{cs}^{cell}(n_s, l), 4\right)\right) \text{ Eq. (2)}$$

Here, $n_{cs}^{cell}(n_s, l) = \sum_{i=0}^{7} c(8N_{\text{symb}}^{\text{UL}} \cdot n_s + 8l + i) \cdot 2^i$ , $c_{\text{init}} = N_{\text{ID}}^{\text{cell}}$ , $N_{\text{symb}}^{\text{UL}}$ is the number of SC-FDMA symbols comprised in one time slot. For a normal CP, the value is 7. For an extended CP, the value is 6. $n_s$ is the index (0-19) of one time slot in a radio frame, $l$ is the index (0 to 6) of a SC-FDMA symbol in one time slot.

Embodiment 6 (a method for aperiodic CSI reporting)

In the NB-IoT system, considering the signaling overhead and relative stationary of UE, there is no need to support periodic CSI reporting. However, aperiodic CSI reporting may be supported when better coverage is met. For aperiodic CSI reporting, the PMI and RI need not to be reported, and only the CQI value is reported. Therefore, the number of bits required for aperiodic CSI reporting depends only on the number of elements in the CQI table. For example, 2/3 bits indicate 4/8 CQI values. With such a small amount of payload information, aperiodic CSI reporting may be carried by UL ACK / NACK instead of by PUSCH. The following embodiments provide a method for aperiodic CSI reporting carried by UL ACK / NACK transmission.

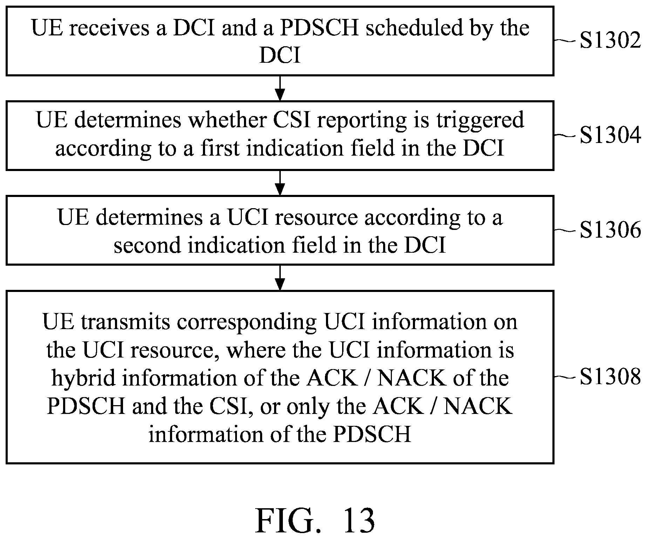

In an embodiment, as shown in FIG. 13, an aperiodic CSI reporting method is provided. The method comprises following steps. In step S1302, the UE receives a DCI and a PDSCH scheduled by the DCI. In step S1304, the UE determines whether CSI reporting is triggered according to a first indication field in the DCI. In step S1306, the UE determines a time domain and / or a frequency domain position of a UCI resource according to a second indication field in the DCI. In step S1308, the UE transmits corresponding UCI information on the UCI resource, where the UCI information is hybrid information of ACK / NACK of the PDSCH and CSI, or only ACK / NACK information of the PDSCH.

In this embodiment, the CSI report is triggered by one indication field in the DCI for scheduling the PDSCH. If the indication field is True, then the UCI information to be transmitted is a mixture of the CSI and the ACK / NACK information of the PDSCH. If the indication field is False, then the UCI information to be transmitted is only the ACK / NACK information of the PDSCH. That is, CSI reporting may be triggered or not, but the ACK / NACK information corresponding to the PDSCH will be transmitted.

Regardless of whether CSI reporting is triggered, a same physical transmission method for transmitting the UCI is used. For example, as described in the foregoing embodiment 4, the processing flow is as follows: information bit generation → repetition encoding of information bits → scrambling of the encoded bit stream → modulating of the scrambled bit stream → mapping of modulated symbols onto UCI resources.

In an example, a difference corresponding to whether CSI reporting is triggered is that the number of information bits would be different. If the UCI information is only ACK / NACK information, only one information bit is used. For example, {1} indicates ACK, {0} represents NACK. If the UCI information is a mixture of ACK / NACK and CSI, the information bits are multiple information bits. For example, three information bits may be used. The first information bit represents ACK / NACK and the last two information bits represents 4 CQI values.

In an example, when the ACK / NACK and the CSI are mixed, in order to improve the detection performance of ACK / NACK, the number of information bits occupied by ACK / NACK is equal to that of CSI. For example, for a total of four information bits, the first two information bits represent ACK / NACK and the last two information bits represents 4 CQI values. For example, {11} represents ACK, {00} represents NACK, or {10} represents ACK, {01} represents NACK.

Whether the CSI is triggered affects the number of information bits carried by the UCI. When the UCI resource contains a certain number of REs, the number of repetitions used for repeated encoding may be different. That is, when the CSI and the ACK / NACK are mixed transmitted, the equivalent coding rate will decrease, which will affect the detection performance. Therefore, when performing uplink power control, hybrid transmission of the CSI and ACK / NACK requires more transmission power than the ACK / NACK only transmission. In addition, when UCI is configured for repeated transmissions, CSI and ACK / NACK hybrid transmissions will require more repetitions than ACK / NACK only transmission to achieve the same performance requirements.

In one example, when UCI is configured to be repeatedly transmitted, the high-layer signaling semi-statically configures two numbers of repetition times (repetition number) for the CSI and ACK / NACK hybrid transmission and the ACK / NACK only transmission, respectively. In another example, when the UCI is configured to be repeatedly transmitted, the higher layer signaling configures only one repetition number for ACK / NACK only transmission, and the repetition number for the hybrid transmission of CSI and ACK / NACK is implicitly determined based on the repetition number configured for ACK / NACK only transmission. For example, the repetition number for the hybrid transmission is twice as the configured repetition number for ACK / NACK only transmission.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

**Claims**

1.    A method for scheduling an uplink control information (UCI) resource for user equipment, comprising:

    receiving downlink control information (DCI);

determining position of a UCI resource region corresponding to a physical downlink share channel (PDSCH) signal scheduled by the DCI according to a predefined rule, wherein the UCI resource region comprises a plurality of UCI resources in a time domain and/or a frequency domain; and

transmitting an ACK/NACK signal corresponding to the PDSCH signal in the UCI resource region.

2. The method as claimed in claim 1, wherein the step of determining the position of a UCI resource region corresponding to a PDSCH signal scheduled by the DCI according to a predefined rule further comprises:

determining position of a reference sub-frame, wherein a time span between a starting sub-frame of the UCI resource region and the reference sub-frame is a predefined value, a semi-statically configured value, or a dynamically configured value.

3. The method as claimed in claim 2, wherein the reference sub-frame is an ending sub-frame of the transmission of the PDSCH signal.

4. The method as claimed in claim 2, wherein the reference sub-frame is an ending sub-frame of a downlink scheduling window for transmission of the PDSCH signal, or an ending sub-frame of the transmission of a physical downlink control channel (PDCCH) signal which carries the DCI, or an ending sub-frame of a search space of the PDCCH signal corresponding to the DCI.

5. The method as claimed in claim 1, wherein the step of determining the position of a UCI resource region corresponding to a PDSCH signal scheduled by the DCI according to a predefined rule further comprises:

determining the position of the UCI resource in the UCI resource region according to an indication field in the DCI, wherein the indication field indicates entire position in the time domain of the UCI resource region and in the frequency domain of the UCI resource region.

6. The method as claimed in claim 1, wherein the step of determining the position of the UCI resource in the UCI resource region according to an indication field in the DCI further comprises:

determining the position of the UCI resource in the UCI resource region according to an indication field in the DCI, wherein the indication field indicates only an offset from the time-frequency position of a reference UCI resource.

7. The method as claimed in claim 1, wherein the step of transmitting an ACK/NACK signal corresponding to the PDSCH signal in the UCI resource region further comprises:

repeatedly encoding the ACK or NACK signal to obtain a repeatedly-encoded bit stream;
scrambling the repeatedly-encoded bit stream to obtain a scrambled bit stream;
modulating the scrambled bit stream to obtain a modulated symbol; and
mapping the modulated symbol onto the UCI resource region.

8. The method as claimed in claim 1, wherein the step of transmitting an ACK/NACK signal corresponding to the PDSCH signal in the UCI resource region further comprises:

generating a symbol sequence according to the ACK or NACK signal;
performing a phase rotation on the symbol sequence; and
mapping the phase rotated symbol sequence onto the UCI resource.

9. A wireless communication device for scheduling an uplink control information (UCI) resource, comprising:

a radio transceiver, performing wireless transmission with at least a base station; and
a controller, connected to the radio transceiver, wherein the controller is configured to receive downlink control information (DCI), determine the position of a UCI resource region corresponding to a physical downlink share channel (PDSCH) signal scheduled by the DCI according to a predefined rule, and transmit an ACK/NACK signal corresponding to the PDSCH signal in the UCI resource region, wherein the UCI resource region comprises a plurality of UCI resources in a time domain and/or a frequency domain.

10. The wireless communication device as claimed in claim 9, wherein the controller is further configured to determine the position of a reference sub-frame for determining the position of the UCI resource region corresponding to the PDSCH signal scheduled by the DCI according to the predefined rule, wherein a time span between a starting sub-frame of the UCI resource region and the reference sub-frame is a predefined value, a semi-statically configured value, or a dynamically configured value.

11. The wireless communication device as claimed in claim 10, wherein the reference sub-frame is an ending sub-frame of the transmission of the PDSCH signal.

12. The wireless communication device as claimed in claim 11, wherein the reference sub-frame is an ending sub-frame of a downlink scheduling window for transmission of the PDSCH signal, or an ending sub-frame of the transmission of a physical downlink control channel (PDCCH) signal which carries the DCI, or an ending sub-frame of a search space of the PDCCH signal corresponding to the DCI.

13. The wireless communication device as claimed in claim 9, wherein the controller is further configured to determine the position of the UCI resource in the UCI resource region according to an indication field in the DCI, and wherein the indication field indicates entire position in the time domain of the UCI resource region and in the frequency domain of the UCI resource region.

14. The wireless communication device as claimed in claim 9, wherein the controller is further configured to determine the position of the UCI resource in the UCI resource region according to an indication field in the DCI, and wherein the indication field indicates only an offset from the time-frequency position of a reference UCI resource, and wherein the position of the reference UCI resource is semi-statically configured or implicitly determined.

15. The wireless communication device as claimed in claim 9, wherein the controller is further configured to perform repeated encoding on the ACK or NACK signal to obtain a repeatedly-encoded bit stream, perform scrambling on the repeatedly-encoded bit stream to obtain a scrambled bit stream, perform modulating on the scrambled bit stream to obtain a modulated symbol, and map the modulated symbol onto the UCI resource region, so as to transmit the ACK/NACK signal corresponding to the PDSCH signal in the UCI resource region.

16. The wireless communication device as claimed in claim 9, wherein the controller is further configured to generate a symbol sequence according to the ACK or NACK signal, perform a phase rotation on the symbol sequence, and map the phase rotated symbol sequence onto the UCI resource, so as to transmit the ACK/NACK signal corresponding to the PDSCH signal in the UCI resource region.

FIG. 1

200  210

Baseband processing device 212 — RF processing device 211 — ▽ 213

Storage device 230 — Controller 220 — Display device 240

Input / output device 250

## FIG. 2A

300  360

Baseband processing device 362 — RF processing device 361 — ▽ 363

Storage device 380 — Controller 370 — Wired communication interface 390

## FIG. 2B

UE receives DCI and a PDSCH signal scheduled by the DCI ── S302

UE determines a position of the UCI resource region corresponding to the PDSCH signal according to a predefined rule, where the UCI resource region comprises a plurality of UCI resources in a time domain and/or a frequency domain ── S304

UE determines a UCI resource in the UCI resource region according to an indication field in the DCI ── S306

UE transmits the ACK / NACK information corresponding to the PDSCH signal on the UCI resource ── S308

FIG. 3

FIG. 4

Ending position of the DL scheduling window

DL scheduling window

| PDCCH | PDSCH |

The DCI carried in the PDCCH for scheduling a PDSCH

The DCI carried in the PDCCH comprises a dedicated indication field to indicate the position of a UCI resource in the UCI resource region

Starting position of the UCI resource region

Time span is a predefined value, such as 12ms

A UCI resource, for example, occupying 1 subcarrier and 2 sub-frames

| #1 | #13 |
| #2 | #14 |
| #3 | #15 |
| . | . |
| . | . |
| . | . |
| . | . |
| . | . |
| . | . |
| #12 | #24 |

A UCI resource region comprising a plurality of UCI resources in the time and frequency domains

EP 3 425 980 A1

FIG. 5

Ending position of PDCCH transmission

Starting position of the UCI resource region

A UCI resource, for example, occupying 1 subcarrier and 2 sub-frames

Time span is a semi-statically configured value, such as 30ms

| PDCCH | | PDSCH |

A UCI resource region comprising a plurality of UCI resources in the time and frequency domains

The DCI carried in the PDCCH for scheduling a PDSCH

| #1 | #13 |
| #2 | #14 |
| #3 | #15 |
| . | . |
| . | . |
| . | . |
| . | . |
| . | . |
| . | . |
| . | . |
| #12 | #24 |

The DCI carried in the PDCCH comprises a dedicated indication field to indicate the position of a UCI resource in the UCI resource region

FIG. 6

EP 3 425 980 A1

PDCCH search space

Ending position of PDCCH search space

Starting position of the UCI resource region

A UCI resource, for example, occupying 1 subcarrier and 2 sub-frames

Time span is a semi-statically configured value, such as 30ms

| PDCCH | | PDSCH |
|-------|--|-------|

The DCI carried in the PDCCH for scheduling a PDSCH

The DCI carried in the PDCCH comprises a dedicated field to indicate where a UCI resource in the UCI resource region is

| #1 | #13 |
|----|-----|
| #2 | #14 |
| #3 | #15 |
| . | . |
| . | . |
| . | . |
| . | . |
| . | . |
| . | . |
| . | . |
| . | . |
| #12 | #24 |

A UCI resource region comprising a plurality of UCI resources in the time and frequency domains

FIG. 7

EP 3 425 980 A1

PDCCH region          PDSCH region          A UCI resource, for example, occupying 1 subcarrier and 2 sub-frames

Time span is greater than a predefined value, such as 12ms

| PDCCH search space | PDSCH #1 | PDSCH #2 | ..... | PDSCH #N |

DL scheduling window

UL scheduling window

Time span is greater than a predefined value, such as 8ms

| PUSCH #1 | | | PUSCH #N-3 | #1 | #13 |
| | | | | #2 | #14 |
| | | | | #3 | #15 |
| PUSCH #2 | PUSCH #3 | ......... | PUSCH #N-2 | PUSCH #N-1 | . | . |
| | | | | | . | . |
| | | | | | . | . |
| | | | | | . | . |
| PUSCH #4 | | | PUSCH #N | . | . |
| | | | | #12 | #24 |

PUSCH region

FIG. 8

A UCI resource region comprising a plurality of UCI resources in the time and frequency domains

EP 3 425 980 A1

A UCI resource region comprising a plurality of UCI resources in the time and frequency domains

Allocated UCI resource, for example, occupying 1 subcarrier and 2 sub-frames

Indicating the starting sub-frame of the UCI resource

Indicating the position of the subcarrier of the UCI resource

A subcarrier

A sub-frame

DCI for scheduling the PDSCH

UCI resource indication field

FIG. 9

DCI for scheduling the
PDSCH

A UCI resource region comprising a
plurality of UCI resources in the time and
frequency domains

| UCI resource indication field |

| #1 | #13 |
| #2 | #14 |
| #3 | #15 |
| ⋮ | ⋮ |
| | |
| | |
| | |
| | |
| | |
| | |
| #12 | #24 |

Indicating a UCI resource
in the UCI resource region

Allocated UCI resource, for example,
occupying 1 subcarrier and 2 sub-frames

FIG. 10

EP 3 425 980 A1

| UE generates information bits corresponding to the ACK / NACK according to the decoding result of the PDSCH | ~S1102 |
|---|---|

↓

| UE repeatedly encodes the generated information bits | ~S1104 |
|---|---|

↓

| UE scrambles the encoded bit stream | ~S1106 |
|---|---|

↓

| UE modulates the scrambled bit stream | ~S1108 |
|---|---|

↓

| UE maps the modulated symbol onto the corresponding UCI resource | ~S1110 |
|---|---|

# FIG. 11

| UE generates symbol sequence corresponding to the ACK / NACK according to the decoding result of the PDSCH | ~S1202 |
|---|---|

↓

| UE performs phase rotation on each symbol in the symbol sequence | ~S1204 |
|---|---|

↓

| UE maps the phase-rotated symbol sequence onto a corresponding UCI resource | ~S1206 |
|---|---|

# FIG. 12

| UE receives a DCI and a PDSCH scheduled by the DCI | ~ S1302 |

| UE determines whether CSI reporting is triggered according to a first indication field in the DCI | ~ S1304 |

| UE determines a UCI resource according to a second indication field in the DCI | ~ S1306 |

| UE transmits corresponding UCI information on the UCI resource, where the UCI information is hybrid information of the ACK / NACK of the PDSCH and the CSI, or only the ACK / NACK information of the PDSCH | ~ S1308 |

FIG. 13

| INTERNATIONAL SEARCH REPORT | International application No. |
|---|---|
| | **PCT/CN2017/076546** |

**A. CLASSIFICATION OF SUBJECT MATTER**

H04W 72/04 (2009.01) i; H04L 5/00 (2006.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE; 3GPP: downlink control information, DCI, PDSCH, uplink control information, UCI, ACK, schedul+, resource, location, position, time domain, frequency domain, PRB

**C. DOCUMENTS CONSIDERED TO BE RELEVANT**

| Category* | Citation of document, with indication, where appropriate, of the relevant passages | Relevant to claim No. |
|---|---|---|
| X | CN 102316595 A (ZTE CORP.), 11 January 2012 (11.01.2012), description, paragraphs [0045]-[0086], and figures 1-9 | 1-16 |
| X | CN 103098536 A (SHARP CORPORATION), 08 May 2013 (08.05.2013), description, paragraphs [0060]-[0106], and figures 2-6 | 1-16 |
| A | CN 104135355 A (SONY CORPORATION), 05 November 2014 (05.11.2014), the whole document | 1-16 |
| A | CN 102437895 A (CHINA ACADEMY OF TELECOMMUNICATIONS TECHNOLOGY), 02 May 2012 (02.05.2012), the whole document | 1-16 |
| A | US 2015230240 A1 (LG ELECTRONICS INC.), 13 August 2015 (13.08.2015), the whole document | 1-16 |

☐ Further documents are listed in the continuation of Box C.     ☒ See patent family annex.

| *    Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 10 May 2017 (10.05.2017) | **05 June 2017 (05.06.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Qian** Telephone No.: (86-10) **82245296** |

Form PCT/ISA/210 (second sheet) (July 2009)

## INTERNATIONAL SEARCH REPORT
### Information on patent family members

International application No.

PCT/CN2017/076546

| Patent Documents referred in the Report | Publication Date | Patent Family | Publication Date |
|---|---|---|---|
| CN 102316595 A | 11 January 2012 | WO 2012152113 A1 | 15 November 2012 |
| CN 103098536 A | 08 May 2013 | WO 2011132721 A1 | 27 October 2011 |
| | | JP 2013526088 A | 20 June 2013 |
| | | EP 2561717 A1 | 27 February 2013 |
| | | US 2013034073 A1 | 07 February 2013 |
| | | JP 2015029350 A | 12 February 2015 |
| CN 104135355 A | 05 November 2014 | US 2016073421 A1 | 10 March 2016 |
| | | WO 2014177020 A1 | 06 November 2014 |
| CN 102437895 A | 02 May 2012 | WO 2013067857 A1 | 16 May 2013 |
| US 2015230240 A1 | 13 August 2015 | KR 101413351 B1 | 27 June 2014 |
| | | CN 104823261 A | 05 August 2015 |
| | | EP 2946397 A1 | 25 November 2015 |
| | | JP 2015536609 A | 21 December 2015 |
| | | US 2014204867 A1 | 24 July 2014 |
| | | RU 2608570 C1 | 23 January 2017 |
| | | WO 2014112840 A1 | 24 July 2014 |
| | | US 2015230240 A1 | 13 August 2015 |

Form PCT/ISA/210 (patent family annex) (July 2009)